# EUROPÄISCHE PATENTSCHRIFT

(11) **EP 0 854 528 B1**
(45) Veröffentlichungstag und Bekanntmachung des Hinweises auf die Patenterteilung: **18.07.2001**
(21) Anmeldenummer: 97119167.1
(22) Anmeldetag: 03.11.1997
(51) Int. Cl.: H01M 10/28, H01M 2/02, H01M 2/08

(54) **Alkalischer Akkumulator in Form einer Knopfzelle**
Alcaline accumulator in the shape of a button cell
Accumulateur alcalin ayant une forme de type bouton

(30) Priorität: 13.12.1996 DE 19651976
(43) Veröffentlichungstag der Anmeldung: 22.07.1998
(73) Patentinhaber: VARTA Gerätebatterie GmbH, 30419 Hannover (DE)
(72) Erfinder: Lindner, Hans Jürgen, Dr., 457911 Singapore (SG)
(74) Vertreter: Kaiser, Dieter Ralf, Dipl.-Ing.

(56) Entgegenhaltungen:
- DE-A- 3 413 257
- DE-A- 4 305 561
- US-A- 4 302 517
- US-A- 4 507 370
- PATENT ABSTRACTS OF JAPAN vol. 015, no. 066 (E-1034), 15.Februar 1991 -& JP 02 291105 A (ELNA CO LTD;OTHERS: 01), 30.November 1990,
- PATENT ABSTRACTS OF JAPAN vol. 004, no. 067 (E-011), 20.Mai 1980 -& JP 55 037731 A (HITACHI MAXELL LTD), 15.März 1980,

## Beschreibung

Die Erfindung betrifft eine wiederaufladbare Knopfzelle, die tablettenförmige, negative und positive Elektroden getrennt durch einen Separator und einen alkalischen Elektrolyten in einem aus einem becherförmigen Unterteil und einen darin eingepaßten deckelförmigen Oberteil gebildeten Gehäuse enthält, wobei die Gehäuseteile unter Zwischenlage eines Dichtringes durch Bördelung oder Crimpung gasdicht verschlossen sind.

Die Erfindung betrifft weiterhin ein Verfahren zur Herstellung von Zellen der vorgenannten Art.

Aus dem Dokument "Rechargeable Batteries in Japan" edited by Y. Miyatake and A. Kozawa, JEC Press Inc. 1977, p. 388 - 391 sind wiederaufladbare Knopfzellen und deren konstruktive Gestaltung bekannt. Dabei erfolgt die Montage dieser Zellen in der Weise, daß die tablettenförmig gepreßte positive Elektrode in den Zellenbecher eingelegt, alkalischer Elektrolyt zudosiert, der Separator, die tablettenförmige negative Elektrode und der Deckel mit Kontaktfeder sowie Dichtring darüber positioniert und die Zelle durch Bördelung oder Crimpung des Becherrandes über den Deckelrand gasdicht verschlossen wird. Bei der vorbeschriebenen Montage ist es zwingend erforderlich, daß die Elektroden zentrisch positioniert sind und nicht infolge mechanischer Einflüsse, wie z.B. durch Vorschuberschütterungen an der Montagelinie in eine außermittige, versetzte Position geraten. Es besteht hierbei die Gefahr, daß der Separator seitlich verschoben wird und dadurch die Elektroden in eine Kurzschlußsituation geraten, die zu einem Totalausfall der galvanischen Zelle führen können. Bei einer außenmittigen Lage der Elektroden besteht außerdem die Gefahr, daß die Dichtung samt Zelldeckel nicht mehr zentrisch gefügt werden können, was bei einer automatischen Montage mit hohen Fertigungsgeschwindigkeiten zu einer Beschädigung der Dichtung und/oder der negativen Elektrode führt. Letzteres nimmt sowohl nachteiligen Einfluß auf die Dichtungseigenschaften als auch auf die elektrischen Zustandswerte der galvanischen Zelle. Dies äußert sich z.B. in einer Erhöhung des inneren Widerstandes der Zelle.

Die Erfindung hat sich die Aufgabe gestellt, eine wiederaufladbare Knopfzelle und ein Verfahren zu ihrer Herstellung anzugeben, die es gestatten, daß die Elektroden und der Separator bei automatischer Fertigung mit hohen Fertigungsgeschwindigkeiten zentrisch und kurzschlußsicher in der Knopfzelle positioniert werden.

Erfindungsgemäß wird die Aufgabe dadurch gelöst, daß bei Knopfzellen der vorbeschriebenen Art der Dichtungsring an der unteren in die Knopfzelle gerichteten Kante mindestens 3 Haltenasen besitzt, die die im Gehäuseoberteil befindliche Elektrodentablette halten und zentrieren und die sich teilweise über deren zum Separator gerichtete Fläche erstrecken. Die Erfindung wird wie in den Ansprüchen 2 - 4 beschrieben weiter ausgestaltet.

Das erfindungsgemäße Verfahren zur Herstellung einer Knopfzelle erfolgt in der Weise, daß in das becherförmige Gehäuseunterteil Elektrolyt, eine Elektrodentablette und der Separator eingebracht werden, daß das deckelförmige Gehäuseoberteil mit dem Dichtring, der anderen Elektrodentablette und gegebenenfalls mit einer Kontaktfeder bestückt wird und daß das Gehäuseoberteil auf das Gehäuseunterteil geklappt und durch Bördelung oder Crimpung das Gehäuse der Knopfzelle gasdicht verschlossen wird. Die erfindungsgemäße Knopfzelle und das Verfahren zur ihrer Herstellung weisen den Vorteil auf, daß eine der Elektroden erschütterungssicher durch die Zelldichtung im deckelförmigen Gehäuseoberteil geklemmt wird. Die an der Innenseite des Dichtrings befindlichen Haltenasen sorgen für einen zentrierten Sitz der Elektrode. Die getrennte Vormontage der positiven und negativen Elektroden, zum einen im becherförmigen Gehäuseunterteil und zum anderen im deckelförmigen Gehäuseoberteil, gestatten eine hochautomatisierte Fertigung. Die Klemmung und Zentrierung einer Elektrode im Gehäuseoberteil hat weiterhin den Vorteil, daß eine kurzschlußsichere automatische Montage mit hoher Fertigungsgeschwindigkeit ohne Beschädigung des Dichtringes oder der negativen Elektrode durchgeführt werden kann. Weiterhin gestattet die Klemmung einer Elektrode im deckelförmigen Gehäuseoberteil die einfache Vormontage einer Kontaktfeder, da diese ohne eine zusätzliche Schweißverbindung durch die darüber liegende Elektrodentablette im Gehäuseoberteil gehalten wird.

Die Erfindung wird nachfolgend an den Figuren 1 - 3 beispielhaft erläutert.

Figur 1 zeigt eine Schnittdarstellung der einzelnen Teile einer erfindungsgemäßen wiederaufladbaren Knopfzelle.

Figur 2 zeigt die Innenseite des Gehäuseoberteils im vormontierten Zustand.

Figur 3 zeigt die Ausgestaltungsvarianten A bis E der Haltenasen dargestellt am Schnitt durch das Gehäuseoberteil im vormontierten Zustand.

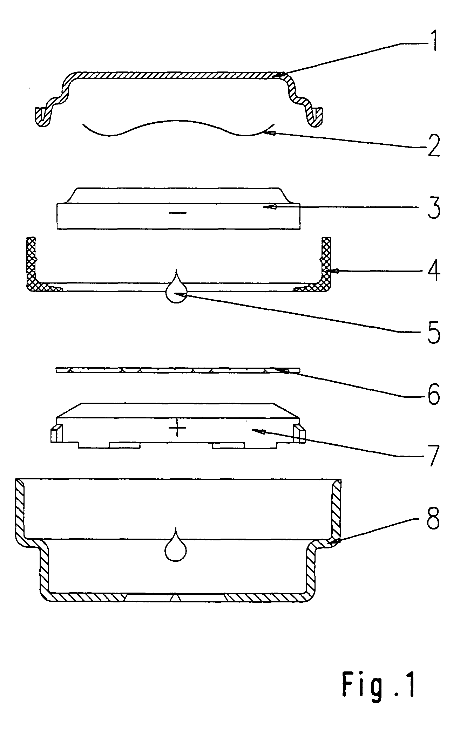

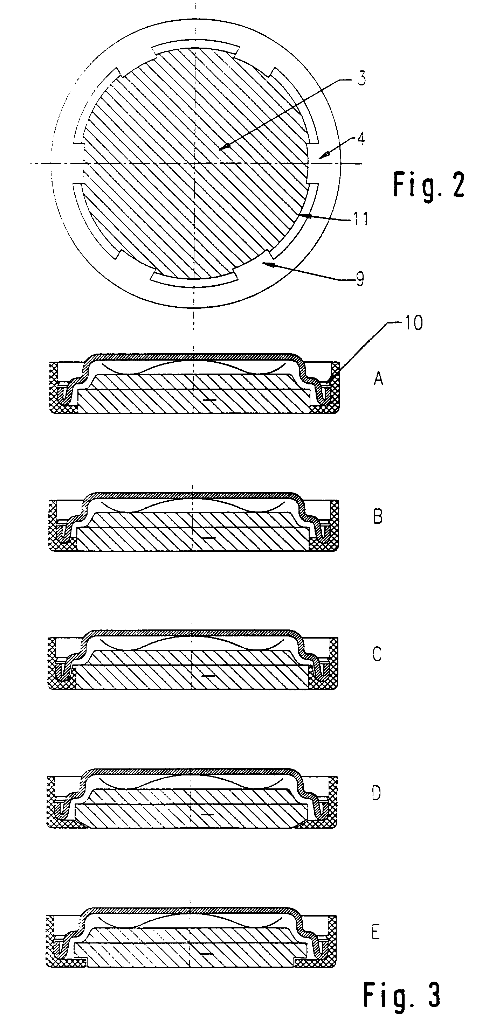

Die erfindungsgemäßen wiederaufladbaren Knopfzellen werden gemäß Figur 1 in der Weise hergestellt, daß in zwei separaten Vormontagelinien zum einen in das becherförmige Gehäuseunterteil 8, Elektrolyt 5, die positive Elektrode 7, und der Separator 6 eingebracht werden. In einer zweiten Linie wird in das deckelförmige Gehäuseoberteil 1 die Kontaktfeder 2 sowie die negative Elektrode 3 eingelegt und durch das Aufbringen des Dichtringes 4 gehalten und zentriert. Das vormontierte Gehäuseoberteil wird dann auf das vormontierte Gehäuseunterteil geklappt und die beiden Teile werden durch Bördelung oder Crimpung des Becherrandes des Gehäuseunterteils 8 über den Deckelrand des Gehäuseoberteils 1 gasdicht verschlossen. Die Figur 2 zeigt, daß die negative Elektrodentablette 3 durch die Haltenasen 9 des Dichtringes 4 zentrisch im Gehäuseoberteil 1 gehalten wird, wobei Gasaustauschkanäle 11 frei bleiben. Diese Gasaustauschkanäle 11 sind notwendig, um das bei Überladereaktionen entstehende Gas an der als Gasverzehrelektrode ausgebildeten Rückseite der negativen Elektrode 3 umsetzen zu können. Die Figur 3 zeigt die Varianten A - E für die Ausgestaltung der Haltenasen 9 in Verbindung mit entsprechenden Gestaltungen der negativen Elektrodentablette 3. Bei den nicht erfindungsgemäßenVarianten A - C wird die Elektrodentablette 3 von Haltenasen 9 durch Preßpassung gehalten, wobei sich die Haltenasen 9 in zunehmendem Maße entlang der Seitenfläche der Elektrodentablette 3 erstrecken.

Bei der erfindungsgemäßen Variante D ist die zum Separator gerichtete Kante der Elektrodentablette 3 abgeschrägt. Die Haltenasen 9 weisen dann erfindungsgemäß eine Gegenschräge auf und halten durch die partielle Überdeckung der Elektrodentablette 9 diese im Gehäuseoberteil 1.

Bei der erfindungsgemäßen Variante E ist in die Elektrodentablette 3 ein ringförmiger Absatz eingeformt, in den sich die Haltenasen 9 erstrecken.

Der Dichtring 4 wird vorzugsweise durch eine an der Innenseite des Dichtringes 4 umlaufende, wulstförmige Verdickung 10 am Gehäuseoberteil 1 gehalten. Das Gehäuseoberteil 1, dessen Deckelkante vorzugsweise zurückgeklappt ist, rastet dabei beim Aufdrücken des Dichtringes 4 auf das Gehäuseoberteil 1 im Sinne einer Clipverbindung mit der Deckelkante hinter die wulstförmige Verdickung 10 des Dichtringes 4 ein.

## Patentansprüche

1. Wiederaufladbare Knopfzelle, die tablettenförmige negative und positive Elektroden (3,7) getrennt durch einen Separator (6) und einen alkalischen Elektrolyt (5) in einem becherförmigen Gehäuseunterteil (8) und einem darin eingepaßten deckelförmigen Gehäuseoberteil (1) enthält, wobei die Gehäuseteile (1,8) unter Zwischenlage eines Dichtringes (4) durch Bördelung oder Crimpung miteinander gasdicht verbunden sind, dadurch gekennzeichnet, daß der Dichtring (4) an seiner unteren in die Knopfzelle gerichteten Kante mindestens 3 Haltenasen (9) besitzt, die die im Gehäuseoberteil (1) befindliche Elektrodentablette (3) halten und zentrieren und die sich teilweise über deren zum Separator (6) gerichtete Fläche erstrecken.

2. Wiederaufladbare Knopfzelle nach Anspruch 1 oder 2, dadurch gekennzeichnet, daß der Dichtring (4) durch Preßpassung oder eine wulstförmige Verdickung (10) am Gehäuseoberteil (1) gehalten ist.

3. Wiederaufladbare Knopfzelle nach Anspruch 1 oder 2, dadurch gekennzeichnet, dass die Elektrodentablette (3) an ihrem in die Zelle weisenden Rand abgeschrägt ist und die Haltenasen (9) eine Gegenschräge aufweisen.

4. Wiederaufladbare Knopfzelle nach Anspruch 1 oder 2, dadurch gekennzeichnet, dass die Elektrodentablette (3) an ihrem in die Zelle weisenden Rand einen ringförmigen Absatz besitzt, in den die Haltenasen (9) eingreifen.

5. Verfahren zur Herstellung einer wiederaufladbaren Knopfzelle gemäß einem oder mehreren der Ansprüche 1 bis 4, dadurch gekennzeichnet, daß in das becherförmige Gehäuseunterteil (8) Elektrolyt (5), eine Elektrodentablette (7) und der Separator (6) eingebracht werden, daß das deckelförmige Gehäuseoberteil (1) mit dem Dichtring (4), der anderen Elektrodentablette (3) und gegebenenfalls mit einer Kontaktfeder (2) bestückt wird und daß das Gehäuseoberteil (1) auf das Gehäuseunterteil (8) geklappt und durch Bördelung oder Crimpung das Gehäuse gasdicht verschlossen wird.

## Claims

1. Rechargeable button cell, which contains negative and positive electrodes (3, 7), in the form of tablets, separated by a separator (6) and an alkaline electrolyte (5) in a housing lower part (8), in the form of a cup, and a housing upper part (1), which is in the form of a cover and is fitted therein, with the housing parts (1, 8) being connected to one another in a gas-tight manner and with the interposition of a sealing ring (4) by swaging or crimping, characterized in that the sealing ring (4) has at least three retaining lugs (9) on its lower edge, pointing into the button cell, which retaining lugs (9) hold and centre the electrode tablet (3) located in the housing upper part (1) and partially extend over its surface pointing towards the separator (6).

2. Rechargeable button cell according to Claim 1 or 2, characterized in that the sealing ring (4) is held on the housing upper part (1) by a push fit or by a thickened region (10) in the form of a bead.

3. Rechargeable button cell according to Claim 1 or 2, characterized in that the electrode tablet (3) is chamfered on its edge pointing into the cell, and the retaining lugs (9) have a matching chamfer.

4. Rechargeable button cell according to Claim 1 or 2, characterized in that the electrode tablet (3) has an annular step on each edge pointing into the cell, in which step the retaining lugs (9) engage.

5. Method for producing a rechargeable button cell according to one or more of Claims 1 to 4, characterized in that electrolyte (5), an electrode tablet (7) and the separator (6) are fitted in the housing lower part (8), which is in the form of a cup, in that the housing upper part (1) which is in the form of a cover, is fitted with the sealing ring (4), the other electrode tablet (3) and, if required, with a contact spring (2) and in that the housing upper part (1) is folded onto the housing lower part (8), and the housing is closed in a gas-tight manner by swaging or crimping.

## Revendications

1. Pile rechargeable en forme de bouton, comprenant les électrodes négative et positive (3, 7) en forme de pastille, séparées par un séparateur (6) et un électrolyte alcalin (5), disposés dans la partie inférieure en forme de cuve (8) d'un boîtier et dans la partie supérieure en forme de couvercle (1) de ce boîtier qui s'applique sur la partie inférieure, ces deux parties (1, 8) étant reliées entre elles, par l'intermédiaire d'une bague d'étanchéité (4), par bordage ou sertissage, d'une façon étanche aux gaz,
caractérisée en ce que
la bague d'étanchéité (4) est munie d'au moins 3 ergots de maintien (9) sur sa face inférieure dirigée vers la pile, ces ergots assurant le maintien et le centrage de la pastille d'électrode (3) montée dans la partie supérieure (1) du boîtier, et s'étendant sur une partie de la face de cette pastille tournée vers le séparateur (6).

2. Pile rechargeable en forme de bouton selon la revendication 1,
caractérisée en ce que
la bague d'étanchéité (4) est fixée dans la partie supérieure (1) du boîtier par ajustage serré ou par un renflement de forme torique (10).

3. Pile rechargeable en forme de bouton selon l'une quelconque des revendications 1 ou 2,
caractérisée en ce que
la pastille d'électrode (3) est biseautée sur sa face tournée vers la pile, et
les ergots de maintien comportent une contre-face biseautée.

4. Pile rechargeable en forme de bouton selon l'une quelconque des revendications 1 ou 2,
caractérisée en ce que
la pastille d'électrode (3) présente, sur son bord faisant face à la pile, un épaulement circulaire dans lequel sont disposés les ergots (9).

5. Procédé pour la fabrication d'une pile rechargeable en forme de bouton selon l'une ou plusieurs des revendications 1 à 4,
caractérisé en ce que
dans la partie inférieure (8) en forme de cuve du boîtier, sont disposés l'électrolyte (5), une pastille d'électrode (7) et le séparateur (6),
la partie supérieure (1) du boîtier, en forme de couvercle, est équipée de la bague d'étanchéité (4) de l'autre pastille d'électrode (3) et éventuellement d'un ressort de contact(2,)
la partie supérieure (1) du boîtier est emboîté sur la partie inférieure (8), et
le boîtier est fermé d'une façon étanche par bordage ou sertissage.
